# FASCICULE DE BREVET EUROPEEN

(11) **EP 0 753 350 B1**
(45) Date de publication et mention de la délivrance du brevet: **16.05.2001**
(21) Numéro de dépôt: 96420230.3
(22) Date de dépôt: 05.07.1996
(51) Int. Cl.: B05B 5/10, B05B 5/053, H02H 7/00, H02H 3/04

(54) **Procédé d'élaboration de haute tension et dispositif de projection électrostatique de produit de revêtement**
Verfahren zum Herstellung höher Spannung und Anlage zum Spritzen von Beschichtungsmaterialien
Method for producing high voltage and installation for electrostatic spraying of a coating product

(30) Priorité: 10.07.1995 FR 9508622
(43) Date de publication de la demande: 15.01.1997
(73) Titulaire: SAMES S.A., F-38243 Meylan Cédex (FR)
(72) Inventeur: Burtin, Jean Pierre, 38120 Saint Egreve (FR); Dobrowolski, Flavien, 38650 Sinard (FR)
(74) Mandataire: Myon, Gérard Jean-Pierre

(56) Documents cités:
- EP-A- 0 219 409
- CH-A- 532 859
- FR-A- 2 532 127
- GB-A- 2 115 243

## Description

L'invention se rapporte à un appareil de projection électrostatique d'un produit de revêtement tel que par exemple de la peinture et concerne plus particulièrement un perfectionnement permettant d'éviter la création d'arcs électriques pouvant représenter un réel danger lorsque le produit de revêtement contient des substances volatiles et inflammables.

Un appareil de projection électrostatique comporte notamment un projecteur mobile muni d'une électrode haute tension et agencé pour créer un champ électrique entre ladite électrode et l'objet à recouvrir (ce dernier étant mis à la terre) et pour disperser le produit de revêtement. Pour ce faire, l'appareil de projection comprend, outre l'électrode, des moyens d'alimentation en produit de revêtement, en énergie de projection (air) et en énergie électrique. Le projecteur est donc relié à une unité d'alimentation et de contrôle, fixe, par un toron de câbles électriques et de conduits divers. L'énergie électrique est presque toujours délivrée par le projecteur sous forme d'une haute tension continue de l'ordre de 50 à 150 kv, appliquée à l'électrode. Le courant résultant, représenté par le flux de particules chargées et les ions atmosphériques créés ou entraînés par le champ est de l'ordre de 50 à 200 µA. Plusieurs solutions ont été proposées pour appliquer la haute tension à l'électrode du projecteur.

On peut appliquer directement la haute tension à l'électrode, à partir d'un générateur haute tension situé dans l'unité d'alimentation et de contrôle placée à distance. Celle-ci renferme donc les organes de conversion de l'énergie électrique fournie par le réseau alternatif de distribution en une haute tension continue. Le toron d'alimentation mentionné ci-dessus comporte alors nécessairement un câble haute tension à gaîne isolante adaptée en conséquence.

On peut aussi alimenter le projecteur à partir d'une très basse tension continue (quelques dizaines de volts) si ledit projecteur renferme un montage en cascade d'un oscillateur haute fréquence alimenté par cette très basse tension continue, d'un transformateur élévateur délivrant une moyenne tension haute fréquence (de l'ordre de quelques kV) et d'un classique ensemble redresseur-multiplicateur de tension (à condensateurs et diodes) transformant la moyenne tension haute fréquence en haute tension continue, cette dernière étant appliquée à l'électrodes. Dans ce cas, l'unité d'alimentation et de contrôle comporte seulement un transformateur abaisseur et un redresseur pour transformer la basse tension alternative du réseau de distribution en très basse tension continue. Le toron d'alimentation précité comporte des conducteurs (sans isolation renforcée) transportant ce courant continu vers l'oscillateur.

On a aussi proposé de ne placer que le transformateur et l'ensemble redresseur-multiplicateur de tension dans le projecteur. L'oscillateur est ainsi reporté à distance dans l'unité d'alimentation et de contrôle. Dans ce cas, le toron d'alimentation transporte un signal alternatif très basse tension, haute fréquence. L'invention qui sera décrite plus loin s'applique en particulier à un tel agencement bien que son principe puisse être mis en oeuvre avec tout système comportant une alimentation en courant d'une électrode de charge.

Les arcs électriques observés en fonctionnement peuvent avoir des causes diverses:

Quel que soit le dispositif utilisé, il peut arriver que la distance entre l'électrode haute tension du projecteur et la pièce à recouvrir mise à la terre devienne insuffisante pour supporter la valeur de la haute tension continue.

Si la haute tension est élaborée à distance du projecteur, un défaut d'isolement du câble haute tension peut aussi être une cause d'arcs électriques.

En revanche, si la haute tension est élaborée dans le projecteur, le toron transporte un courant relativement important (quelques ampères) et une rupture de conducteur ou un mauvais contact de raccordement est susceptible de provoquer un arc électrique en raison de l'énergie emmagasinée dans l'inductance du circuit.

Différents systèmes ont été proposés pour lutter contre la formation d'arcs électriques. Ces systèmes connus se distinguent les uns des autres selon le type d'arc électrique que l'on cherche à éliminer et selon la grandeur physique surveillée.

FR-A-2 158 031 propose de surveiller les valeurs du courant électrique à la sortie d'un transformateur haute tension et de couper l'alimentation du dispositif générateur de haute tension au delà d'une valeur de seuil de ce courant. EP-B1-0 219 409 propose de surveiller les variations dans le temps du courant alternatif circulant dans le conducteur reliant l'unité basse tension au redresseur-élévateur de tension d'un générateur. Un problème des systèmes de surveillance de ce type réside dans le fait qu'en cas de défaut du système de surveillance, un fonctionnement potentiellement dangereux, c'est-à-dire susceptible de conduire à la formation d'arcs électriques, peut ne pas être détecté. La boucle de surveillance n'est pas complètement sûre.

De même, le brevet US 4 402 030 propose de mesurer les variations de courant dans le circuit haute tension du générateur mais ne permet pas de détecter un mauvais fonctionnement du circuit de contrôle. En particulier, le détecteur de situation potentiellement dangereux est inhibé lors des démarrages du générateur.

L'invention résout ce problème de manière simple et économique.

Elle concerne un procédé d'élaboration d'une haute tension pour l'application électrostatique de produit de revêtement dans lequel est détecté une situation potentiellement dangereuse par mesure, dans une boucle de détection, d'une grandeur physique ou de ses variations par rapport au temps, caractérisé en ce qu'il consiste à vérifier le fonctionnement de la boucle de détection lors des démarrages du dispositif d'élaboration de haute tension.

Grâce à l'invention, la vérification du bon fonctionnement de la boucle a lieu à de nombreuses reprises lors du fonctionnement d'une installation de revêtement électrostatique. En effet, qu'il s'agisse d'une installation manuelle ou automatique, la haute tension est interrompue et ré-enclenchée plusieurs fois lors du revêtement d'un objet, par exemple lorsque le peintre relâche la gâchette d'un pistolet manuel puis appuie à nouveau dessus ou lorsqu'un projecteur automatique se trouve en face d'une partie de la pièce qui ne doit pas être revêtue telle qu'une fenêtre de carrosserie de véhicule automobile et passe devant une partie à revêtir telle qu'un panneau de porte.

La grandeur physique mesurée peut être le courant qui doit avoir une valeur non nulle lors du démarrage du dispositif. Selon une variante particulièrement avantageuse de l'invention, les variations mesurées sont les variations au cours du temps d'un courant électrique circulant dans le dispositif d'élaboration de la haute tension. Ce courant est nul lorsque le dispositif est à l'arrêt. Il est non nul après le démarrage du dispositif. Ainsi, chaque démarrage du dispositif génère bien une variation du courant, cette variation pouvant être détectée par les systèmes connus de l'art antérieur. Le procédé de l'invention inclut une étape de vérification de ce que la boucle de détection " voit " bien une variation du courant lors de chaque démarrage. Si tel n'est pas le cas, la boucle de détection ne fonctionne pas correctement et une alarme ou un moyen de coupure de l'alimentation basse tension du générateur est mis en oeuvre.

L'invention concerne aussi un dispositif permettant de mettre en oeuvre le procédé, et plus précisément un dispositif de projection électrostatique de produit de revêtement comprenant un générateur de haute tension et une boucle de détection d'une situation potentiellement dangereuse par mesure d'une grandeur physique ou de ses variations par rapport au temps, caractérisé en ce qu'il comporte des moyens de vérification du fonctionnement de ladite boucle de détection lors du démarrage dudit dispositif.

L'invention sera mieux comprise et d'autres avantages de celle-ci apparaîtront plus clairement à la lumière de la description qui va suivre d'un mode de réalisation d'un dispositif de projection électrostatique de produit de revêtement conforme à son principe donnée uniquement à titre d'exemple et faite en référence aux dessins annexés dans lesquels:

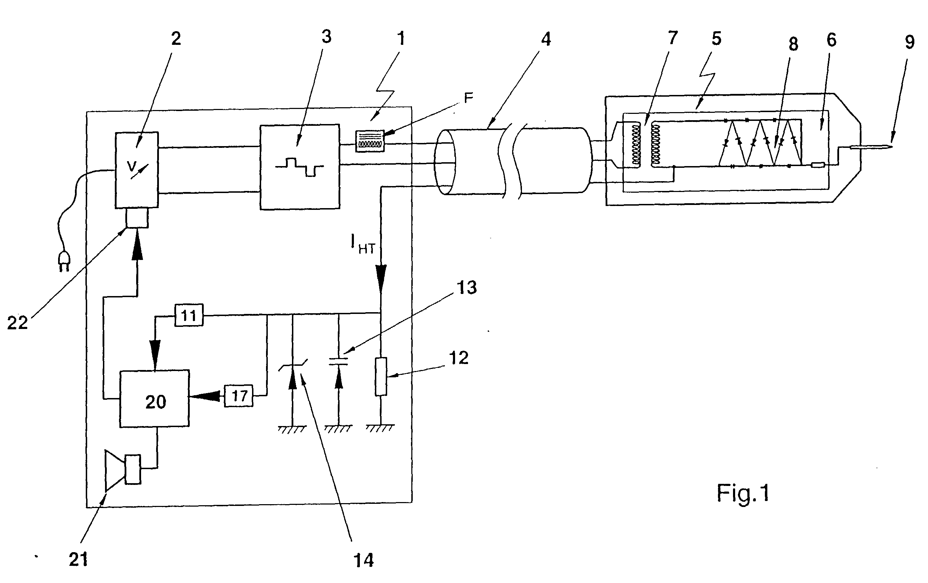

- la figure 1 est un schéma de principe d'un dispositif générateur de haute tension conforme à l'invention;
- la figure 2 est une courbe de la valeur du courant au secondaire du transformateur haute tension du mode de réalisation de la figure 1 et
- la figure 3 est une courbe des variations par rapport au temps du courant représenté sur la figure 2.

Dans le circuit de la figure, une unité basse tension 1 est essentiellement constituée par une alimentation stabilisée 2 connectée au secteur et délivrant un courant continu et une tension continue ajustable à un générateur 3 de courant électrique périodique de fréquence f pilotable en fréquence. L'alimentation stabilisée 2 pourrait aussi avoir pour source de courant une batterie d'accumulateurs ou toute autre source de courant. Le signal électrique périodique généré par l'unité basse tension 1 est un signal carré de forme constante minimisant les harmoniques de premier rang, c'est-à-dire une onde la plus proche possible d'une sinusoïde parfaite. Un filtre F permet de lisser partiellement ce signal. L'amplitude de cette onde est variable en fonction de la tension d'alimentation du générateur 3 par l'alimentation stabilisée 1. Bien que la forme du signal évoquée ci-dessus soit particulièrement avantageuse et simple à mettre en oeuvre, tout autre signal périodique permettrait de mettre en oeuvre l'invention, en particulier un signal sinusoïdal.

Le signal périodique issu de l'unité basse tension 1 est appliqué à travers un toron 4 de câbles conducteurs souples à l'entrée d'un projecteur de produit de revêtement 5 disposé dans une cabine non représentée. Le projecteur est alimenté en produit de revêtemente et en air de pulvérisation d'une manière connue en soi et non représentée. Il comprend un redresseur élévateur de tension 6 comprenant un transformateur d'entrée 7 et un multiplicateur de tension 8. La sortie du multiplicateur de tension 8 est connectée à une électrode de charge 9.

Le courant I_{HT} au secondaire du transformateur 7 est mesuré grâce à un conducteur électrique passant par le toron de câbles 4 qui est relié à l'entrée d'un circuit de mise à l'échelle 11 en parrallèle avec une résistance 12 de mesure, une capacité 13 de filtrage de la composante haute tension et une diode 14 d'écrêtage. La sortie du circuit 11 est reliée à une entrée d'un calculateur 20. D'autre part, un circuit différentiateur 17 est connecté entre l'entrée du circuit 11 et une autre entrée du calculateur 20.

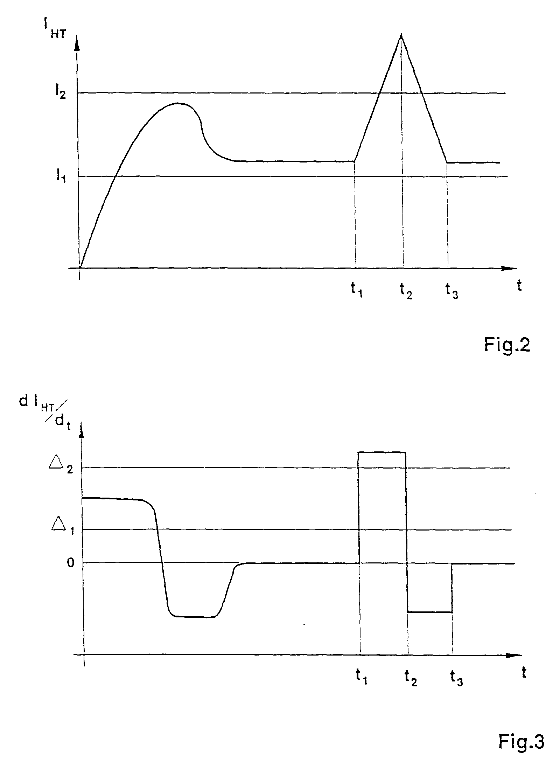

L'évolution du courant I_{HT} par rapport au temps est représentée sur la figure 2. Elle est mesurée dans la boucle formée par le circuit 11, les composants 12 à 14 et le calculateur 20. Si le démarrage a lieu à t=0, le courant croît jusqu'à une valeur limite puis décroît jusqu'à la valeur de consigne ou une valeur proche de celle-ci. Si, à un instant t₁, un objet à la masse est approché de l'électrode 9, le courant croît fortement et une situation dangereuse peut être atteinte. Si l'objet est éloigné à partir d'un instant t₂, le courant décroît jusqu'à l'instant t₃ où il reprend sa valeur de consigne. Le calculateur est apte à piloter une alarme 21 ou un moyen d'inhibition 22 de l'alimentation 2 lorsque la valeur du courant I_{HT} est supérieure à une valeur I₂ fixée expérimentalement.

De manière analogue, la boucle de mesure des variations de courant comprend le circuit 17 et le calculateur 20. Si le démarrage a lieu à l'instant t=0, la valeur de dI_{HT}/dt est d'abord positive puis négative puis nulle lorsque le courant est stabilisé. A partir de t₁, dI_{HT}/dt a une valeur positive, puis entre t2 et t₃, une valeur négative et enfin une valeur nulle après t₃, c'est-à-dire lorsque le courant a repris sa valeur de consigne. Le calculateur est apte à piloter l'alarme 21 ou le moyen d'inhibition 22 de l'alimentation 2 lorsque la valeur du courant dI_{HT}/dt est supérieure à une valeur Δ₂ fixée expérimentalement.

Conformément à l'invention, le calculateur est apte à détecter les valeurs du courant et de ses variations lors de chaque démarrage, c'est-à-dire peu de temps après t=0. En effet, on sait que la valeur du courant doit nécessairement dépasser une valeur I₁, fixée expérimentalement, dans un intervalle de temps correspondant à l'établissement du régime stationnnaire. La durée de cet intervalle de temps est fixée expérimentalement; elle peut, par exemple, varier entre 100 ms et une seconde. En pratique, I₁ peut être fixée comme une fraction de la valeur de consigne, par exemple 70%. Le calculateur est apte à piloter l'alarme 21 ou le moyen d'inhibition 22 de l'alimentation 2 lorsque la valeur du courant I_{HT} reste inférieure à I₁ pendant la période d'établissement du courant. Ainsi, le fonctionnement de la boucle de détection est vérifié lors de chaque démarrage: si un courant I_{HT} supérieur à I₁ est détecté, on peut supposer que la boucle fonctionne; si aucun courant supérieur à I₁ n'est détecté, la boucle ne fonctionne pas correctement.

De la même manière, conformément à l'invention, le calculateur 20 est apte à vérifier que lors de chaque démarrage, la valeur de dI_{HT}/dt est bien non nulle, c'est-à-dire supérieure à une valeur Δ₁ fixée expérimentalement. En pratique, Δ₁ peut correspondre à une fraction de Δ₂, par exemple 20%. Ainsi, le fonctionnement de la boucle de détection est vérifié lors de chaque démarrage: si une variation dI_{HT}/dt supérieure à Δ₁ est détectée, on peut supposer que la boucle fonctionne; si aucune variation supérieure à Δ₁ n'est détectée, la boucle ne fonctionne pas correctement.

Ces vérifications sont mises en oeuvres lors de chaque démarrage du dispositif, c'est-à-dire chaque fois que la valeur de la haute tension passe d'une valeur nulle à une valeur non nulle, ce qui garantit un grand nombre de vérifications lors d'une journée de travail. Un éventuel dysfonctionnement est donc détecté sans délai.

La vérification pourrait aussi porter sur la valeur de la haute tension U_{HT} obtenue dans le projecteur 5, sur le courant Iₐₗᵢₘ ou la tension Ualim d'alimentation du générateur 3 ou sur toute autre grandeur physique représentative du fonctionnement du dispositif.

On peut noter que l'invention permet de détecter le mauvais fonctionnement de chacun des composants 12 à 14 et/ou des circuits 11 et 17. Elle peut même permettre de détecter un défaut du calculateur 20 si l'on prévoit qu'il active l'alarme 21 ou le moyen 22 par défaut sauf si les signaux obtenus, en sortie du calculateur, par mesure de I_{HT} et de dI_{HT}/dt sont convenables.

Bien entendu, l'invention est applicable en ne mesurant qu'une seule des deux grandeurs ci-dessus, c'est-à-dire soit le courant, soit ses variations par rapport au temps.

L'invention a été représentée avec l'unité basse tension 1 séparée du redresseur-élévateur 5 et reliée à celui-ci par un toron 4 de câbles souples mais elle s'applique aussi à tous les cas de générateurs mentionnés au début de la présente description.

## Revendications

1. Procédé d'élaboration d'une haute tension pour l'application électrostatique de produit de revêtement dans lequel est détecté une situation potentiellement dangereuse par mesure, dans une boucle de détection, d'une grandeur physique (I_{HT}) ou de ses variations (dI_{HT}/dt) par rapport au temps, caractérisé en ce qu'il consiste à vérifier le fonctionnement de la boucle de détection (11,12,13,14,17,20) lors des démarrages du dispositif (1,4,6) d'élaboration de haute tension.

2. Procédé selon la revendication 1 caractérisé en ce que ladite vérification a lieu lors de chaque démarrage d'un dispositif générateur de haute tension.

3. Procédé selon la revendication 1 caractérisé en ce que ladite grandeur physique est un courant électrique (I_{HT}, Iₐₗᵢₘ).

4. Procédé selon la revendication 1 caractérisé en ce que ladite grandeur physique est une tension électrique (U_{HT},Uₐₗᵢₘ).

5. Dispositif de projection électrostatique de produit de revêtement comprenant un générateur de haute tension (1,4,6) et une boucle (11,12,13,14,17,20) de détection d'une situation potentiellement dangereurse par mesure d'une grandeur physique (I_{HT}) ou de ses variations (dI_{HT}/dt) par rapport au temps, caractérisé en ce qu'il comporte des moyens (20) de vérification du fonctionnement de ladite boucle de détection lors du démarrage dudit dispositif.

6. Dispositif selon la revendication 5 caractérisé en ce que lesdits moyens sont activés lors de chaque démarrage du dispositif.

7. Dispositif selon la revendication 5 comprenant une unité basse tension (1) reliée à un élévateur de tension (6), caractérisé en ce que ladite grandeur physique est le courant électrique (I_{HT}) circulant dans ledit élévateur de tension.

8. Dispositif selon la revendication 5 comprenant une unité basse tension (1) reliée à un élévateur de tension (6), caractérisé en ce que ladite grandeur physique est la tension électrique (U_{HT}) fournie par ledit élévateur de tension à une électrode de charge (9).

9. Dispositif selon la revendication 5 caractérisé en ce que lesdits moyens sont reliés à une alarme (21) ou à un moyen d'inhibition (22).

## Claims

1. Process for producing a high voltage for the electrostatic application of a coating product in which a potentially dangerous situation is detected by measuring, in a detection loop, a physical quantity (I_{HT}) or its variations (dI_{HT}/dt) with respect to time, characterized in that it consists in checking the operation of the detection loop (11, 12, 13, 14, 17, 20) upon the start-ups of the device (1, 4, 6) for producing high voltage.

2. Process according to Claim 1, characterized in that the said check takes place upon each start-up of a high voltage generating device.

3. Process according to Claim 1, characterized in that the said physical quantity is an electric current (I_{HT}, Iₛᵤₚₚ).

4. Process according to Claim 1, characterized in that the said physical quantity is an electric voltage (U_{HT}, Uₛᵤₚₚ)

5. Device for the electrostatic spraying of a coating product comprising a high voltage generator (1, 4, 6) and a loop (11, 12, 13, 14, 17, 20) for detecting a potentially dangerous situation by measuring a physical quantity (I_{HT}) or its variations (dI_{HT}/dt) with respect to time, characterized in that it comprises means (20) for checking the operation of the said detection loop upon the start-up of the said device.

6. Device according to Claim 5, characterized in that the said means are activated upon each start-up of the device.

7. Device according to Claim 5, comprising a low voltage unit (1) linked to a voltage step-up means (6), characterized in that the said physical quantity is the electric current (I_{HT}) flowing through the said voltage step-up means.

8. Device according to Claim 5, comprising a low voltage unit (1) linked to a voltage step-up means (6), characterized in that the said physical quantity is the electric voltage (U_{HT}) provided by the said voltage step-up means to a charging electrode (9).

9. Device according to Claim 5, characterized in that the said means are linked to an alarm (21) or to a disabling means (22).

## Patentansprüche

1. Verfahren zur Erzeugung einer Hochspannung für die elektrostatische Aufbringung von Beschichtungsmaterial, bei dem eine möglicherweise gefährliche Situation durch Messung einer physikalischen Größe (I_{HT}) oder ihren zeitlichen Änderungen (dI_{HT}/dt) in einer Abtastschleife erfaßt wird, dadurch gekennzeichnet, daß es darin besteht, die Funktionsfähigkeit der Abtastschleife (11, 12, 13, 14, 17, 20) beim Starten der Vorrichtung (1, 4, 6) zur Erzeugung einer Hochspannung zu überprüfen.

2. Verfahren nach Anspruch 1, dadurch gekennzeichnet, daß die Überprüfung bei jedem Starten einer Hochspannungserzeugungsvorrichtung stattfindet.

3. Verfahren nach Anspruch 1, dadurch gekennzeichnet, daß die physikalische Größe ein elektrischer Strom (I_{HT}, Iₐₗᵢₘ) ist.

4. Verfahren nach Anspruch 1, dadurch gekennzeichnet, daß die physikalische Größe eine elektrische Spannung ist.

5. Vorrichtung zum elektrostatischen Aufspritzen von Beschichtungsmaterial mit einem Hochspannungsgenerator (1, 4, 6) und einer Abtastschleife (11, 12, 13, 14, 17, 20) zum Erfassen einer möglicherweise gefährlichen Situation durch Messung einer physikalischen Größe (I_{HT}) oder ihrer zeitlichen Änderungen, dadurch gekennzeichnet, daß sie Mittel zum Überprüfen der Funktionsfähigkeit der Abtastschleife beim Starten der Vorrichtung umfaßt.

6. Vorrichtung nach Anspruch 5, dadurch gekennzeichnet, daß die Mittel bei jedem Starten der Vorrichtung aktiviert werden.

7. Vorrichtung nach Anspruch 5, mit einer an einem Spannungserhöher (6) angeschlossenen Niederspannungseinheit, dadurch gekennzeichnet, daß die physikalische Größe ein elektrischer Strom (I_{HT}) ist, der in dem Spannungserhöher fließt.

8. Vorrichtung nach Anspruch 5, mit einer an einem Spannungserhöher (6) angeschlossenen Niederspannungseinheit, dadurch gekennzeichnet, daß die physikalische Größe die von dem Spannungserhöher an eine Ladungselektrode (9) gelieferte elektrische Spannung (U_{HT}) ist.

9. Vorrichtung nach Anspruch 5, dadurch gekennzeichnet, daß die Mittel mit einem Alarm (21) oder einem Mittel zur Sperrung (22) verbunden sind.
